# EUROPEAN PATENT APPLICATION

(11) **EP 2 629 124 A1**
(43) Date of publication of application: **21.08.2013**
(21) Application number: 12001115.0
(22) Date of filing: 20.02.2012
(51) Int. Cl.: G02B 6/00, F21V 7/00

(54) **Halo-typeL LED lamp**

(71) Applicant: Ceramate Technical Co., Ltd, Taoyuan County (TW)
(72) Inventor: Wang, Robert, Taoyuan County (TW)
(74) Representative: Volpert, Marcus

(57) **Abstract**

A halo-type LED lamp includes a lamp holder provided with an accommodating groove formed with an opening. An LED light source is received in the interior of the accommodating groove, and a light-guiding ring is annularly mounted on the circumferential edge of the opening of the lamp holder. When the LED light source is started to emit light, a little part of the light will be emitted to the light-guiding ring to make the light-guiding ring shine and form a halo around the circumferential edge of the opening of the lamp holder to offer illumination to the circumference of the halo-type LED lamp. Further, the colored light produced by the colored light-guiding ring will function to produce esthetic sense of decoration to the whole space for building a pleasant atmosphere.

## Description

### BACKGROUND OF THE INVENTION

### 1. Field of the Invention

This invention relates to a halo-type LED lamp.

### 2. Description of the Prior Art

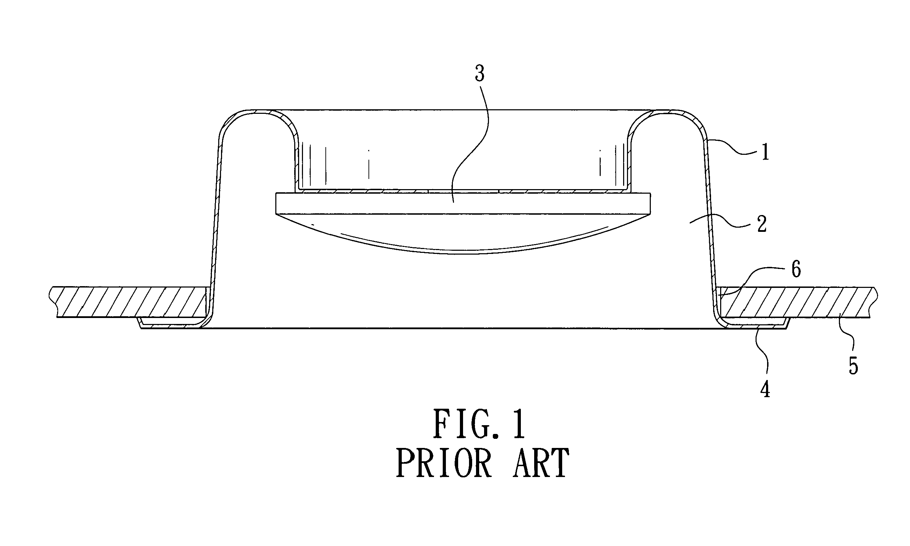

At present, the illumination effect of LED (Light-Emitting Diode) has been elevated greatly in pace with gradual maturity of the technique of LED and hence, LED has been extensively employed as a luminous source of lamps. A conventional LED lamp, as shown in Fig. 1, includes a lamp holder 1 having one side formed with an accommodating groove 2 for receiving an LED light source 3 therein and a circumferential edge annularly provided with a projecting edge 4. Thus, after an LED lamp is installed on a ceiling 5, the LED light source 3 will emit light to the space under the ceiling 5.

However, the light of an LED is a straight one and unable to illuminate the circumference of the lamp holder 1 so a place on the ceiling 5, where is adjacent to the lamp holder 1 will become gloomy and the circumference of the lamp holder 1 will form a shadow region. Further, after the conventional LED lamp is installed on the ceiling 5, parts of the structure of the LED lamp will be exposed to the outer side of the ceiling 5. For instance, in the preferred embodiment of the conventional LED lamp, the annularly projecting edge 4 of the lamp holder 1 for covering the reserved orifice 6 of the ceiling 5 is exposed out of the ceiling 5. Therefore, coloring and baking varnish are necessary to be carried out to the lamp holder in order to maintain consistency of decoration of the ceiling 5, not only increasing cost but also resulting in environmental pollution.

### SUMMARY OF THE INVENTION

The objective of this invention is to offer a halo-type LED lamp that is able to enhance decoration effect and illuminate the circumference of the LED lamp for improving the defect of a conventional LED lamp that is likely to form a shadow area at the circumference of the LED lamp.

The halo-type LED lamp in the present invention includes a lamp holder having one side provided with an accommodating groove that is formed with an opening and installed therein with an LED light source. A light-guiding ring is annularly fixed at the opening of the lamp holder, having an inner annular surface provided with a light incident portion and an outer annular surface disposed with a light-outgoing portion. A lampshade is combined with the light-guiding ring and covered on the opening of the lamp holder.

As described above, the light-guiding ring is mounted at the opening of the lamp holder, and has the inner annular surface and the outer annular surface respectively formed with a light incident portion and a light-outgoing portion; therefore, when the LED light source is started to emit light, a little part of the light will be projected to the light-guiding ring via the light incident portion and, after passing through the light-guiding ring, will be projected out via the light-outgoing portion, thus making the light-guiding ring shine to form a halo around the circumferential edge of the opening of the lamp holder. By so designing, the halo-type LED lamp of this invention can offer illumination to the circumference of the LED lamp, effectively improving the drawback of a conventional LED lamp that is easy to form a shadow area at the circumference of the LED lamp. Moreover, the colored light produced by the light-guiding ring will produce esthetic sense of decoration to the whole space and build a pleasant atmosphere.

### BRIEF DESCRIPTION OF DRAWINGS

This invention will be better understood by referring to the accompanying drawings, wherein:
Fig. 1 is a schematic view of a conventional LED lamp in a using condition;
Fig. 2 is a perspective view of a halo-type LED lamp in the present invention;
Fig. 3 is an exploded perspective view of the halo-type LED lamp in the present invention;
Fig. 4 is a cross-sectional view of the halo-type LED lamp in the present invention;
Fig. 5 is a partial magnified cross-sectional view of the projecting edge of a lamp holder in the present invention;
Fig. 6 is a cross-sectional view of the halo-type LED lamp in the present invention, showing a condition that the LED light source does not yet emit light; and
Fig. 7 is a cross-sectional view of the halo-type LED lamp in the present invention, showing a condition that the LED light source is started to emit light.

### DETAILED DESCRIPTION OF THEPREFERRED EMBODIMENT

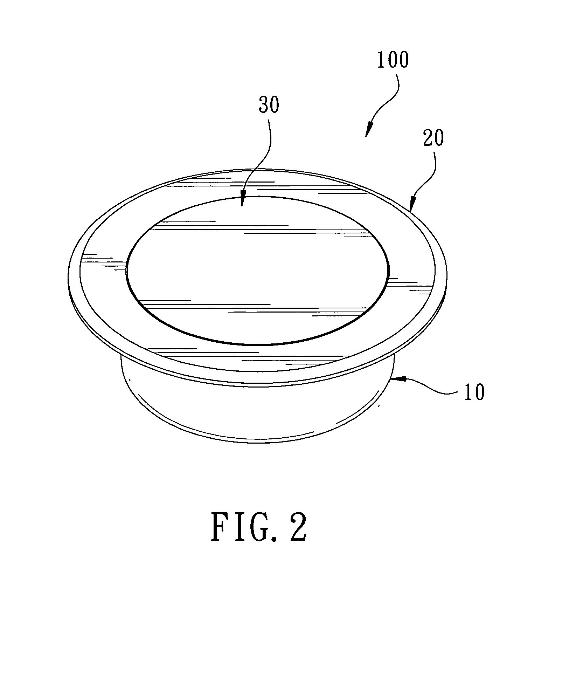

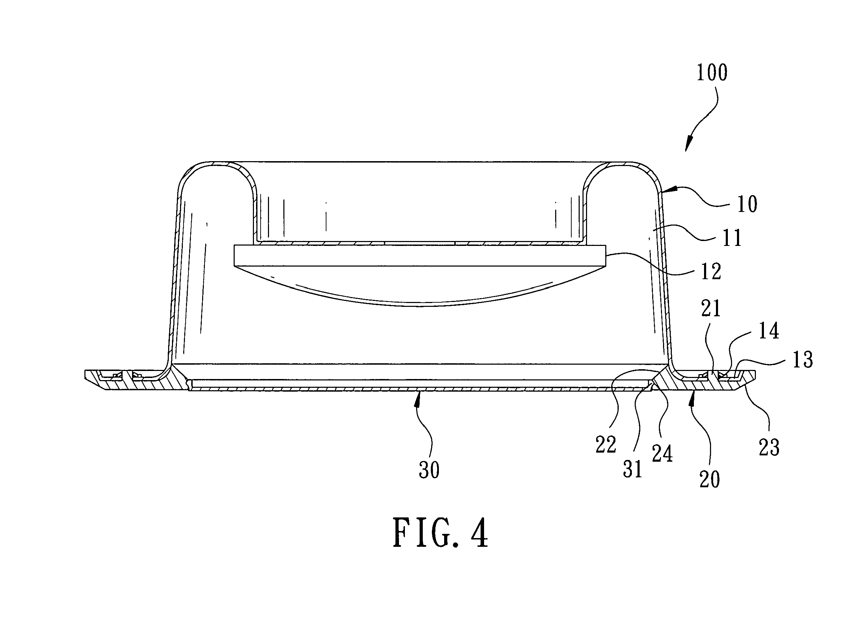

A preferred embodiment of a halo-type LED lamp 100 in the present invention can be applied to different types of lamps, such as a ceiling lamp, a down light, an electric bulb and a fluorescent lamp, and in this preferred embodiment, the halo-type LED lamp is used as a down light, which is only one of the types mentioned above. The halo-type LED lamp 100 in the present invention, as shown in Figs. 2, 3 and 4, includes a lamp holder 10, a light-guiding ring 20 and a lampshade 30 as main components combined together.

The lamp holder 10 has one side provided with an accommodating groove 11 formed with an opening 111 and having an LED light source 12 installed therein. The opening 111 of the lamp holder 10 has its circumferential edge annularly formed with a projecting edge 13 extending outward and bored with a plurality of fixing holes 14.

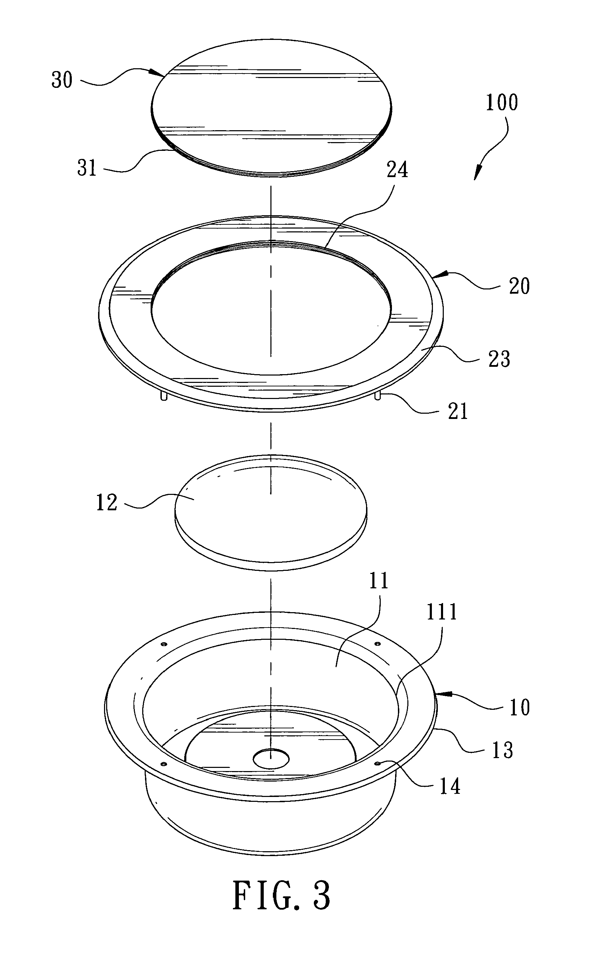

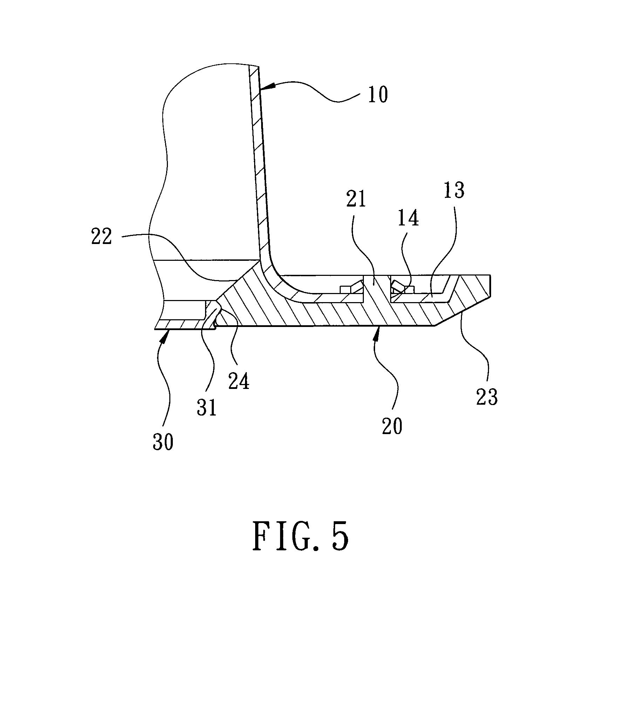

The light-guiding ring 20 to be fixed around the opening 111 of the lamp hold 10 is made of colored acrylics or optical fiber. Referring to Figs. 3 and 5, the light-guiding ring 20 has its underside provided with a plurality of fixing posts 21 to be respectively and correspondingly inserted and secured in the fixing holes 14 of the lamp holder 10 for fixing the light-guiding ring 20 on the projecting edge 13 of the lamp holder 10. Further, the light-guiding ring 20 has its inner ring surface provided with a light incident portion 22 and its outer ring surface disposed with a light-outgoing portion 23. In this preferred embodiment, the light-incident portion 22 is an inclined plane facing the LED light source 12 while the light-outgoing portion 23 is an inclined plane facing the outer side of the accommodating groove 11, and the light-incident portion 22 and the light-outgoing portion 23 are a misty surface. The light-guiding ring 20 has its inner annular edge bored with an engage groove 24.

The lampshade 30 is to be combined with the light-guiding ring 30 and covered on the opening 111 of the lamp holder 10, having its circumferential edge annularly provided with an engage bar 31 to be engaged with the engage groove 24 of the light-guiding ring 20 for securing the lampshade 30 at the inner annular surface of the light-guiding ring 20.

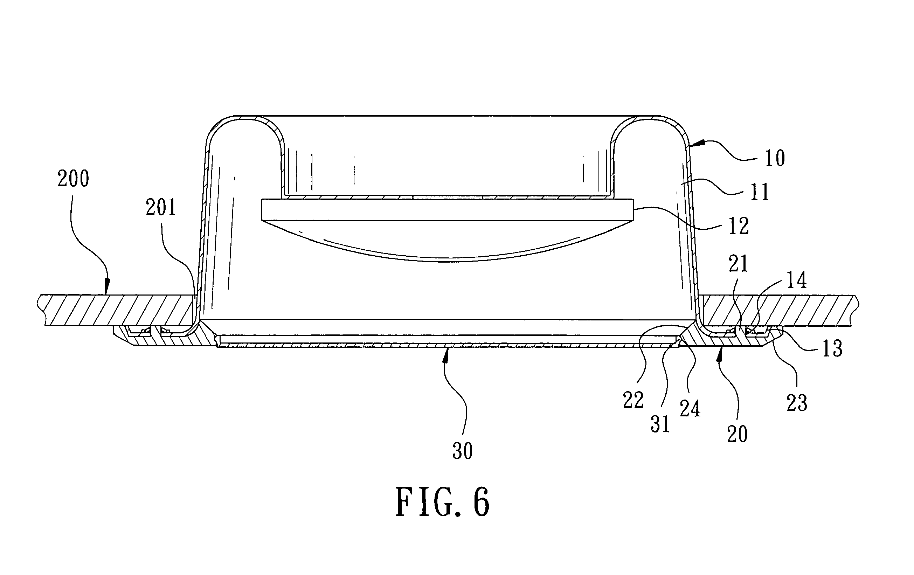

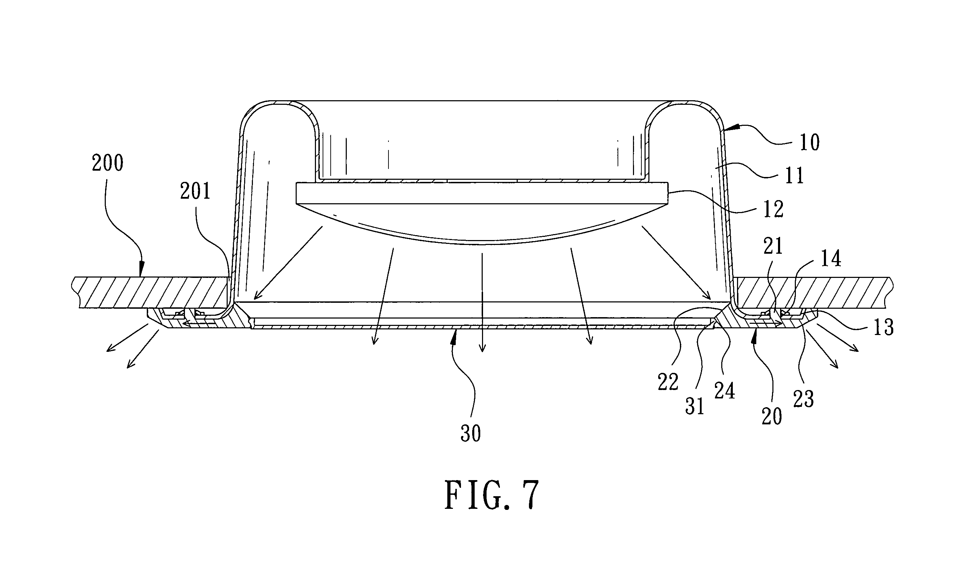

In using, referring to Figs. 6 and 7, firstly, a halo-type LED lamp 100 is firmly inserted in the reserved hole 201 in a ceiling 200 and then, the halo-type LED lamp 100 is switched on to start the LED light source 12 to emit light. As mentioned above, the light-guiding ring 20 is annularly positioned at the opening 111 of the lamp holder 10, and the inner annular surface and the outer annular surface of the light-guiding ring 20 are provided with the light incident portion 22 and the light-outgoing portion 23 respectively. Therefore, most part of the light emitted by the LED light source 12 will directly pass through the lampshade 30 to illuminate the space under the ceiling 200 while a little part of the light will be projected to the light-guiding ring 20 via the light incident portion 22 and, after passing through the light-guiding ring 20, will be projected out via the light-outgoing portion 23 to make the light-guiding ring 20 shine and form an halo around the circumferential edge of the opening 111 of the lamp holder 10. By so designing, the halo-type LED lamp 100 of this invention can offer illumination to the circumference of the LED lamp 100, able to effectively improve the drawback of the conventional LED lamp that is liable to form a shadow region at the circumference of the LED lamp. In addition, the colored light produced by the light-guiding ring 20 can produce esthetic sense of decoration for building a pleasant atmosphere.

One feature of this invention is that the light incident portion 22 of the light-guiding ring 20 is an inclined plane provided to face the LED light source 12; therefore, the light incident portion 22 possesses a comparatively large light acceptance area, able to elevate light incident amount of the light-guiding ring 20 and make the light-guiding ring 20 well-illuminated.

Another feature of this invention is that the light-guiding ring 20 is fixed on the lamp holder 10 by respectively inserting the fixing posts 21 in the fixing holes 14; therefore, different-colored light-guiding rings 20 can easily be replaced by a user himself in accordance with needs of different decoration, especially fluorescent colored light-guiding rings 20 to obtain matching effect of different colors, that is, to produce esthetic sense of decoration to the whole space for building a pleasant atmosphere.

In addition, the light-guiding ring 20 fixed around the projecting edge 13 of the lamp holder 10 can function to beautify parts of the lamp holder 10, which are exposed to the outer side of the ceiling 200; therefore, during manufacturing a halo-type LED lamp 100, such manufacturing processes as coloring and baking varnish can be omitted, thus achieving effects of environmental protection and cost saving.

While the preferred embodiment of the invention has been described above, it will be recognized and understood that various modifications may be made therein and the appended claims are intended to cover all such modifications that may fall within the spirit and scope of the invention.

## Claims

1. A halo-type LED lamp comprising:
a lamp holder provided with an accommodating groove, said accommodating groove formed with an opening, said accommodating groove of said lamp holder having an LED light source installed in an interior;
a light-guiding ring annularly fixed around said opening of said lamp holder, said light-guiding ring having an inner annular surface provided with a light incident portion and an outer ring surface disposed with a light-outgoing portion; and
a lampshade combined with said light-guiding ring and covered on said opening of said lamp holder.

2. The halo-type LED lamp as claimed in Claim 1, wherein said light incident portion is an inclined plane facing said LED light source, while said light-outgoing portion is an inclined plane facing outside of said accommodating groove.

3. The halo-type LED lamp as claimed in Claim 1, wherein said light incident portion and said light-outgoing portion are a misty surface.

4. The halo-type LED lamp as claimed in Claim 1, wherein said opening of said lamp holder has a circumferential edge annularly provided with a projecting edge extending outward, said projecting edge bored with a plurality of fixing holes, said light-guiding ring set thereon with plural fixing posts corresponding with said fixing holes, said fixing posts respectively inserted and secured in said fixing holes for stabilizing said light-guiding ring on said projecting edge of said lamp holder.

5. The halo-type LED lamp as claimed in Claim 1, wherein an inner annular edge of said light-guiding ring is disposed with an engage groove, while said lampshade has an outer circumferential edge fixed with an engage bar to be engaged in said engage groove for firmly combining said lampshade together with said light-guiding ring.
